# EUROPEAN PATENT SPECIFICATION

(11) **EP 2 349 700 B1**
(45) Date of publication and mention of the grant of the patent: **26.09.2012**
(21) Application number: 08876085.5
(22) Date of filing: 31.10.2008
(51) Int. Cl.: B29D 30/06, B29C 33/20

(54) **PROCESS AND APPARATUS FOR MOULDING AND VULCANISATION OF VEHICLE TYRES**
VERFAHREN UND VORRICHTUNG ZUM FORMEN UND VULKANISIEREN VON FAHRZEUGREIFEN
PROCÉDÉ ET APPAREIL POUR MOULAGE ET VULCANISATION DE PNEUS DE VÉHICULE

(43) Date of publication of application: 03.08.2011
(73) Proprietor: Pirelli Tyre S.P.A., 20126 Milano (IT)
(72) Inventor: SECCHI, Mario, I-20126 Milano (MI) (IT)
(74) Representative: Brasca, Marco
(86) International application number: PCT/IT2008/000681
(87) International publication number: WO 2010/049960

(56) References cited:
- EP-A- 0 170 109
- EP-A- 1 415 781
- US-A- 3 806 288
- US-A- 3 910 735
- US-A- 5 204 036
- US-A- 6 017 206
- US-A1- 2004 121 033
- US-A1- 2006 008 547
- US-A1- 2008 191 389

## Description

The present invention relates to a process and an apparatus for moulding and vulcanisation of tyres for vehicle wheels.

It is known that after building of the green tyre, which operation is carried out through assembly of respective components, a vulcanisation and moulding treatment is carried out aiming at determining the structural stabilisation of the tyre through cross-linking of the elastomeric compositions and at impressing the tread band with a desired tread pattern.

The vulcanisation and moulding treatment is carried out by introducing the green tyre into a moulding cavity of a vulcanisation and moulding apparatus, the walls defining said cavity having a shape matching the outer conformation to be given to the vulcanised tyre.

The moulding cavity is bounded by a pair of annular plates and a plurality of circumferential sectors adapted to be centripetally approached and carrying forming elements in relief facing a geometric axis of the moulding cavity.

The green tyre, once enclosed in the apparatus, is pressed against the containment walls. Subsequently or simultaneously with the pressing step, heat is supplied to the tyre pressed against the containment walls.

By effect of pressing, the forming elements in relief provided on the sectors and plates give rise to formation of a desired tread pattern on the tyre tread, as well as of a plurality of graphic marks on the tyre sidewalls. The supplied heat causes cross-linking of the elastomeric material of which the tyre is made. When the cycle has been completed, the apparatus is opened and the vulcanised and moulded tyre is removed.

In order to obtain narrow cuts or sipes (present in tyres of the winter type suitable for running on a snow-covered roadway, for example) in the tread, following vulcanisation and moulding, the mould is provided with a plurality of blades protruding from the inner surface thereof delimiting the moulding cavities. These blades extend away from said surface.

Document US 3,806,288 discloses a vulcanisation mould divided into segments and comprising two opposite annular portions and a plurality of segments disposed in a ring-like fashion between the two annular portions. The segments carry the tread moulds integral therewith. The lower annular portion is provided with an annular extension having an annular support surface. Each segment is mounted on the annular support surface by means of two mounting elements that, on opening, allow a radial sliding movement of the segments on the annular support surface between a radially internal position and a radially external position. A frustoconical surface of a dish connected to the upper annular portion engages frustoconical surfaces of the segments so as to determine, through axial movement of the dish, the radial closure of the segments towards the radially internal position.

Document US 5,204,036 shows an apparatus for tyre vulcanisation comprising four moulding sections slidably mounted on arms between an open position and a closed position. Each of the moulding sections carries three matrices that are spaced apart from each other, when the moulding sections are opened, and are brought circumferentially close to each other and radially inwardly, when the moulding sections are moved from the open position to the closed position.
Document US 6,017,206 discloses a mold for a tire comprising a plurality of molding elements which in a retracted open position of the mold are spaced apart from each other and arranged circumferentially in a ring, actuating means to which the elements are connected and in which the elements are individually guided for carrying the elements and moving the elements radially toward and away from the axis of the mold between a retracted open position and a closed molding position and, after molding, from the closed position back to the open position.
Document US 3,806,288 discloses an apparatus for curing a pneumatic tire comprising two opposed sidewall moulding sections axially movable towards and away from each other; a plurality of tread moulding segments disposed between said sections; a bearing surface for said segments extending radially outwardly with respect to one of said sections. Means permit radial movement of the segments between a radially outermost position and a radially innermost position in which said segments define a tire curing mould.
Document US 2006/0008547 discloses a mold for molding a tire tread comprising segments partitioned in a tire circumferential direction. The segments comprise a plurality of pieces partitioned in the tire circumferential direction. Only one of the pieces of each segment is fixed while all other pieces are movable in the tire circumferential direction. Document EP 1 415 781 discloses a tire vulcanizing mold wherein a tread ring for molding and vulcanizing the tread portion of a tire is composed of a plurality of sector molds and each sector mold is composed of a segment and a plurality of movable molding pieces disposed arcuately on the inner surface side of the segment.
Another tyre vulcanizing mold is disclosed in EP 0 170 109 A2.

The Applicant has noticed that the elements in relief adapted to form the corresponding tread pattern, placed at the contiguous ends of two adjacent circumferential sectors, during radial closure of the sectors on the green tyre, give rise to a phenomenon referred to as "upsetting" phenomenon. This phenomenon consists in accumulation of the compound in the coupling regions between adjacent sectors.

In fact, the approaching direction of the end elements in relief towards the green tyre is not coincident with the radial direction related to the tyre. The end elements in relief have a radial-motion component and also a tangential-motion component of mutual approaching and come into contact with the elastomeric material when the two sectors are not yet coupled.

The Applicant has noticed that during mutual approaching of the sectors the elements in relief push against the chemical compound without immediately penetrating thereinto but causing a displacement of elastomeric material and consequently accumulation of the compound in the direction of the belt structure and radial displacement towards the centre of the underlying belt structure. In addition, the compound can remain pressed between the aforesaid two elements in relief.

When the tyre is used, the air pressure inside it makes the belt structure take a perfectly annular shape and the accumulated elastomeric material is pushed outwardly forming humps/projections adversely affecting the tyre behaviour on a road and the rolling noise generated thereby.

The Applicant has further noticed that, since the tangential-motion component increases in proportion to the circumferential extension of each individual sector around the tyre, the amount of the accumulated compound is more important if few sectors are used for forming the circular ring surrounding the tread band.

The Applicant has also seen that the blades close to the ends of each sector, once they are inserted in the compound, form an undercut because their insertion direction is not coincident with their radial extension. Once vulcanisation of the tyre has been carried out while the end blades are dipped in the compound, the angular phase displacement between the moving away direction of the end blades and the radial extension of these blades causes bending of the blades during extraction of same, due to the action of the vulcanised compound thereon, said blades being oriented along the moving apart direction of the respective sector portions comprising said blades.

The Applicant has therefore realised that, since the angular phase displacement between the extraction direction of the sector and the radial extension of the end blade increases on increasing of the circumferential extension of the individual sector around the tyre, the amount of this phenomenon becomes of greater importance when few sectors are used for forming the circular ring surrounding the tread band.

In accordance with the present invention, the Applicant has found that by slidably mounting a plurality of circumferential sectors on each of the movable sector carriers and guiding these sectors along radial directions during opening or closing of the mould, the quality of the obtained tyres can be improved, in particular at the regions of mutual approaching of said sectors.

In more detail, according to a first aspect, the present invention relates to a process for moulding and vulcanisation of tyres according to claim 1, comprising:
- preparing a green tyre to be vulcanised comprising a tread band having a radially external surface;
- positioning the green tyre on a lower half-shell of a vulcanisation mould located on a base of a moulding and vulcanisation apparatus and having a geometric axis, said base comprising guides disposed radially relative to the geometric axis;
- engaging a plurality of circumferential sectors, by an axial movement, in said radial guides, which sectors can be centripetally moved close to each other and carry elements in relief for forming a tread pattern, said elements being turned towards the geometric axis;
- axially moving a driving ring towards the base, said ring having a conical surface slidably engaging a plurality of circumferential sector carriers, each of them carrying at least two of said circumferential sectors, so as to determine the radial translation of the circumferential sectors in the radial guides from a first work condition, in which the forming elements in relief are radially spaced apart from the radially external surface of the tyre tread, and a second work condition, in which the forming elements in relief penetrate at least partly into the radially external surface of the tread band; - supplying heat to the tyre penetrated by the forming elements in relief of the circumferential sectors.

According to a further aspect, the present invention relates to an apparatus for moulding and vulcanisation of tyres according to claim 15, comprising:
- a vulcanisation mould having a moulding cavity with walls the shape of which matches that of a green tyre under processing, comprising a tread band having a radially external surface; said moulding cavity being circumscribed by circumferential sectors to be centripetally approached and carrying elements in relief for forming a tread pattern, which elements are turned towards a geometric axis (X-X) of the moulding cavity;
- actuating devices to cause translation of the circumferential sectors between a first work condition in which the forming elements in relief are radially spaced apart from the radially external surface of the tyre tread, and a second work condition, in which the forming elements in relief penetrate at least partly into the radially external surface of the tread band; wherein said actuating devices comprise:
- a plurality of radially movable circumferential sector carriers, each of them carrying at least two circumferential sectors, wherein said at least two circumferential sectors are movable on the respective sector-carrier along a circumferential direction related to said sector-carrier;
- a driving ring having a conical surface slidably engaging said circumferential sector carriers, to determine translation of the circumferential sectors between said first and second work conditions following an axial movement of the driving ring;
- guides radially disposed relative to the geometric axis, wherein the circumferential sectors are mounted on said guides and wherein the guides are adapted to guide said circumferential sectors along radial directions on passing between the first and the second work conditions.

Carrying out division into a number of sectors with a restricted angular extension allows the angular phase displacement between the movement direction of said sectors, when the mould is opened and closed, and the extension direction of the blades, more generally of the elements in relief, to be reduced and also enables reduction in the amount of the undercuts and the height of the humps due to the above mentioned "upsetting" phenomenon.

A greater number of regions in which the "upsetting" phenomenon is present, which however have less marked humps, eliminates or at least greatly reduces the noise due to them during the tyre rolling.

The invention also allows a high number of sectors with a restricted angular extension of each of them to be adopted, while maintaining a smaller number of sector carriers and thus ensuring a simple construction of the assembly.

The invention also ensures a precise movement of the circumferential sectors, optimal centring of same relative to the geometric axis and the tyre, simultaneous closure of these sectors on the radially external surface of the tread band and moving apart of said sectors during opening of the mould.

The invention, in at least one of the aforesaid aspects, can further have one or more of the preferred features hereinafter described.

Preferably, at least in the second work condition, i.e. the closed condition, the circumferential sectors are substantially axially locked in the radial guides. In particular, during radial translation of the circumferential sectors in the radial guides from the first work condition to the second work condition, said circumferential sectors are substantially axially locked in said radial guides.

In accordance with a preferred form of the process, the step of engaging the circumferential sectors in the radial guides comprises the step of axially inserting pins integral with the circumferential sectors into grooves formed in a guide body that is fixed relative to the geometric axis.

In addition, preferably, during radial translation of the circumferential sectors in the radial guides from the first work condition to the second work condition, each of the pins runs in the respective groove substantially starting from a radially external end of the groove towards a radially internal end of said groove.

Preferably, during radial translation of the circumferential sectors in the radial guides from the first work condition to the second work condition, one head belonging to each pin engages a retaining edge of the respective groove, said edge preventing the pin from being axially drawn out of the groove.

Preferably, during radial translation of the circumferential sectors in the radial guides from the first work condition to the second work condition, the circumferential sectors carried by each of the circumferential sector carriers move close to each other on the respective sector carrier along a circumferential direction relative to said sector carrier.

The process preferably further comprises the steps of:
- axially moving the driving ring away from the base to determine radial translation of the circumferential sectors in the radial guides from the second work condition to the first work condition;
- drawing the circumferential sectors out of the radial guides by an axial movement.

Preferably, starting from the second work condition and for at least one length of the radial translation from said second work condition to the first work condition, the circumferential sectors are substantially axially locked in the radial guides.

In particular, during radial translation of the circumferential sectors in the radial guides from the second work condition to the first work condition, the above described pins integral with the circumferential sectors run in the respective grooves formed in a guide body that is fixed relative to the geometric axis, substantially starting from radially internal ends of the grooves towards radially external ends of said grooves.
In addition, the step of drawing the circumferential sectors out of the radial guides comprises the step of axially drawing the pins out of the radially external ends of said grooves.

Preferably, starting from the second work condition and for at least one length of the radial translation from said second work condition to the first work condition, one head belonging to each pin engages a retaining edge of the respective groove, said edge preventing the pin from being axially drawn out of the groove.

In addition, preferably, before drawing the circumferential sectors out of the radial guides, the head of each pin is disengaged from the retaining edge of the respective groove.

Preferably, during radial translation of the circumferential sectors in the radial guides from the second work condition to the first work condition, the circumferential sectors carried by each of the circumferential sector carriers move on the respective sector carrier away from each other along a circumferential direction related to said sector carrier.

In addition, preferably, in the first work condition the circumferential sectors are substantially locked on the respective sector carrier.

Preferably, the apparatus comprises locking devices interposed between the circumferential sectors and the respective circumferential sector carrier and adapted to lock the circumferential sectors relative to the respective circumferential sector carrier at least when said circumferential sectors are in the first work condition.

Due to this technical solution, the circumferential sectors are prevented from freely moving on the respective sector carrier when sectors and sector carriers are released from the guides and moved away from the vulcanised tyre.

According to an embodiment, the locking devices comprise at least one ball elastically housed in a respective seat formed in the circumferential sector and adapted to be housed in a recess formed in the circumferential sector carrier.

Alternatively, the locking devices comprise at least one ball elastically housed in a respective seat formed in the circumferential sector carrier and adapted to be housed in a recess formed in the circumferential sector.

Devices of this kind are efficient and of simple construction.

Preferably, the radial guides comprise grooves slidably coupled to pins.

According to an embodiment, the apparatus comprises a guide body that is fixed relative to the geometric axis and carries the grooves, wherein the pins are integral with the circumferential sectors.

According to an alternative embodiment, the apparatus comprises a.guide body that is fixed relative to the geometric axis and carries the pins, wherein the grooves are formed in the circumferential sectors.

The claimed structure for the guides is of simple construction and ensures accuracy in the movement of the movable parts forming the assembly.

Preferably, in the first work condition the circumferential sectors can be axially disengaged from the respective radial guides.

To this aim, preferably, each groove has a tapering shape starting from a radially external end thereof towards a radially internal end thereof.

The guide shape allows easy insertion of the pins without a very accurate centring being required. When insertion has occurred, the pins are radially guided to the narrowest portion of the respective groove where every circumferential movement is inhibited.

In addition, each pin seen in cross section has an elongated shape in the groove direction.

The elongated shape ensures more accuracy in the radial movement of the sectors and more steadiness of same when they are in the second work condition.

Preferably, each pin has a head and each groove has a retaining edge engaging the head, to prevent the pin from being axially drawn out of the groove.

In addition, the grooves each have an end region without the retaining edge, to enable the pin to be axially drawn out of the respective groove in the first work condition.
Coupling of the pin head with the groove edge prevents axial movement of the sectors relative to the tyre as long as the sectors are radially close to the tyre itself. Due to this expedient, the sectors are prevented from lifting the tyre together with them, owing to possible adhesion between one or more sectors and the vulcanised tyre and during axial moving apart of the sector block from the mould base, since said tyre is designed to then detach therefrom and fall on the base or the ground.

In accordance with the present invention, the sectors remain coplanar with the apparatus base until full detachment of the tyre. Axial moving apart is only made possible when the pins reach the end region of the grooves, i.e. when there is such a radial distance between sectors and tyre that full separation between the sectors and the tyre tread has taken place.

Preferably, the apparatus comprises a guide body for each of the circumferential sector carriers.

This solution is cheaper and in addition allows the only guide body on which there are possible damaged guides to be replaced.

Alternatively, the guide body has an annular shape concentric with the geometric axis and carries all the circumferential sectors.

This solution ensures more stiffness to the assembly and therefore the trajectories of the moving elements are more accurate.

Preferably, each of the circumferential sector carriers comprises an arched guide disposed on a radially internal portion thereof to enable sliding coupling with the circumferential sectors.

According to an embodiment, the arched guide comprises a groove slidably engaged by lugs integral with the circumferential sectors.

Alternatively, the arched guide comprises a ridge slidably engaged in grooves formed in the circumferential sectors.

Both the above solutions ensure stiffness to the assembly and accuracy in the relevant movements.

In accordance with an embodiment, the apparatus comprises an odd number of circumferential sectors for each circumferential sector carrier, wherein a central circumferential sector is fixed relative to the respective circumferential sector carrier.

The central sector moves together with the sector carrier along a radial direction common to both of them.

Preferably, the number of circumfere
each circumferential sector carrier is smaller than or equal to seven.

In addition, the number of circumferential sector carriers is preferably included between six and twelve.

Such a number of sectors allow the angular extension of each of them to be restricted, so as to reduce the angular phase displacement between the radial movement direction of said sectors and the extension direction of the elements in relief, in particular of the blades, placed at the ends of same.

Preferably, the apparatus comprises slide guides interposed between the conical surface of the driving ring and a radially external surface of the circumferential sector carriers.

Together with the other slide guides, also those arranged between the driving ring and the sector carriers ensure smooth and accurate movement of the parts in mutual movement.

In addition, preferably, mutual-engagement edges of adjacent circumferential sectors, along their axial extension are shaped like a pattern portion of the tyre tread.

In particular, the mutual-engagement edges are substantially parallel to the forming elements in relief. Due to this technical expedient, the forming elements in relief, in particular the blades, are not to be interrupted at the circumferential ends of the sectors and there is no need for an accurate coupling between adjacent sectors in order to ensure the continuity of these elements in relief between one sector and the subsequent one and the regularity of their footprint on the tyre.

In addition, since in a plan view of the tread, the coupling edge remains included in a circumferential band, the region in which the "upsetting" phenomenon is present is not disposed along a straight line but is distributed on said circumferential band. As a result this region, being better distributed, gives rise to smaller and wider humps that are therefore less tiresome.

Further features and advantages will become more apparent from the detailed description of a preferred but not exclusive embodiment of an apparatus for moulding and vulcanisation of tyres in accordance with the present invention.

This description will be set out hereinafter with reference to the accompanying drawings, given by way of non-limiting example, in which:
- Fig. 1 is a perspective view of a portion of the apparatus in accordance with the present invention, in an operating configuration;
- Fig. 2 is a section taken along a radial plane of the apparatus seen in Fig. 1;
- Fig. 3 shows a perspective view of the apparatus portion seen in Fig. 1 in a different operating configuration;
- Fig. 3a shows a portion of Fig. 3 to an enlarged scale;
- Fig. 4 is a section taken along a radial plane of the apparatus shown in Fig. 3; and
- Fig. 5 is a perspective view of the apparatus portion seen in Fig. 1 in a further operating configuration.

With reference to the drawings, an apparatus for moulding and vulcanisation of tyres for vehicle wheels in accordance with the present invention has been generally identified by reference numeral 1.

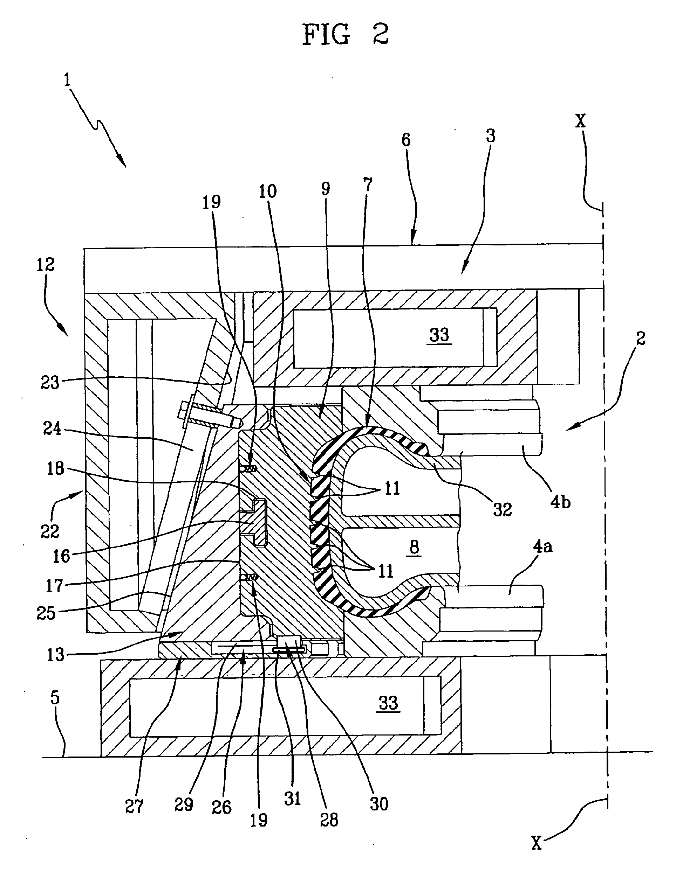

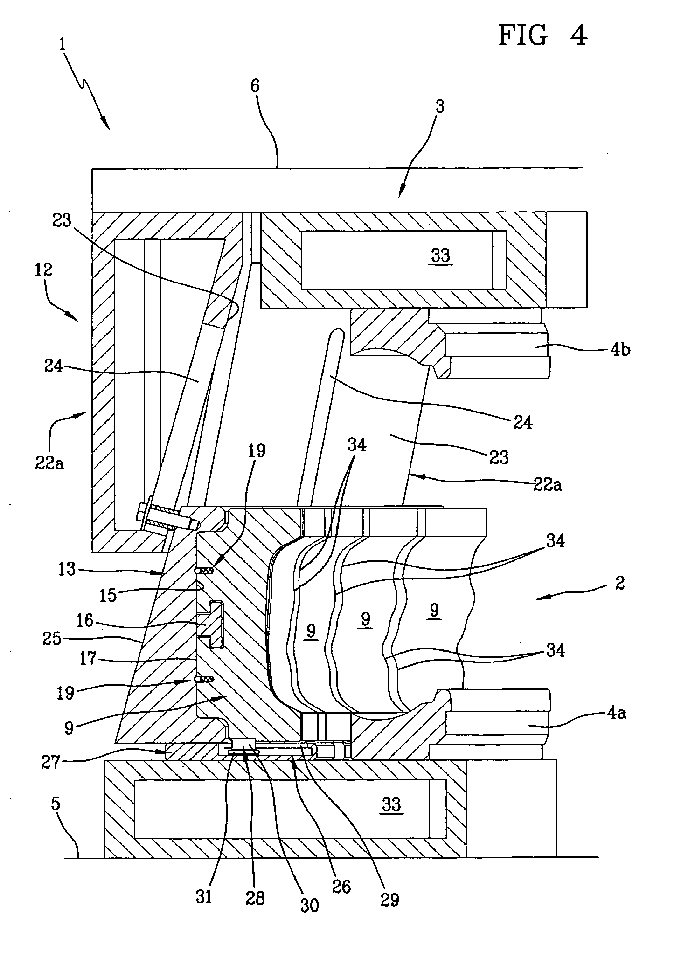

Apparatus 1 comprises a vulcanisation mould 2 operatively associated with a casing 3 and having a lower half-shell 4a and an upper half-shell 4b in engagement with a base 5 (Fig. 2 and 4) and a closing portion 6 of casing 3 respectively, or with other suitable devices for enclosing a tyre being processed 7 (Fig. 2) inside said mould.

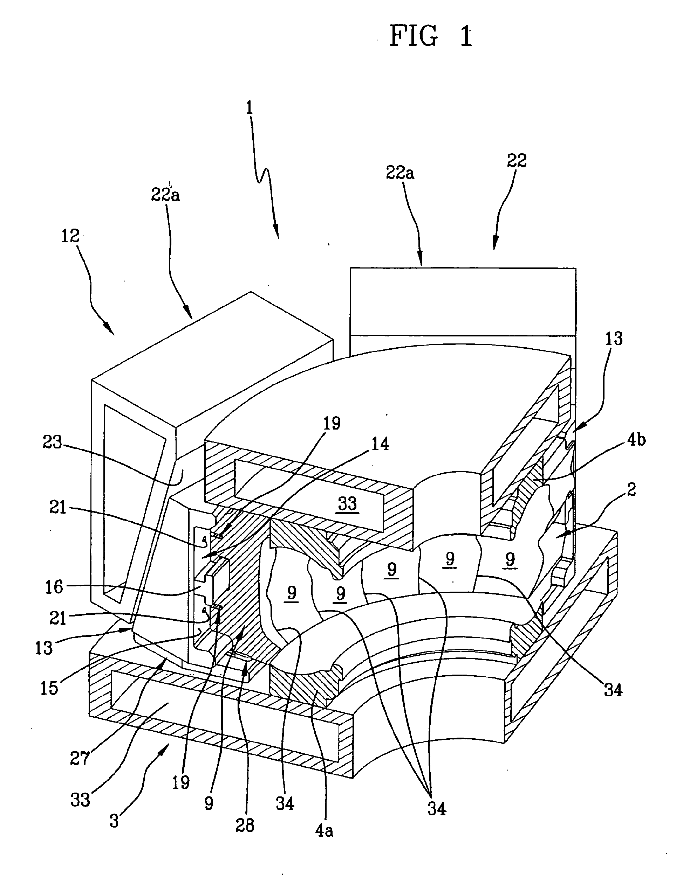

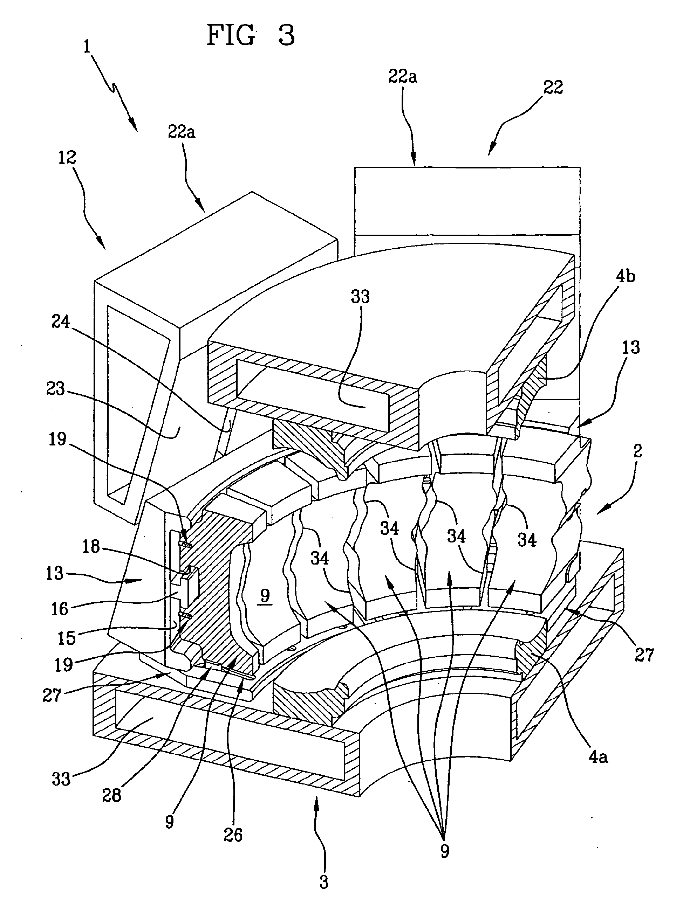

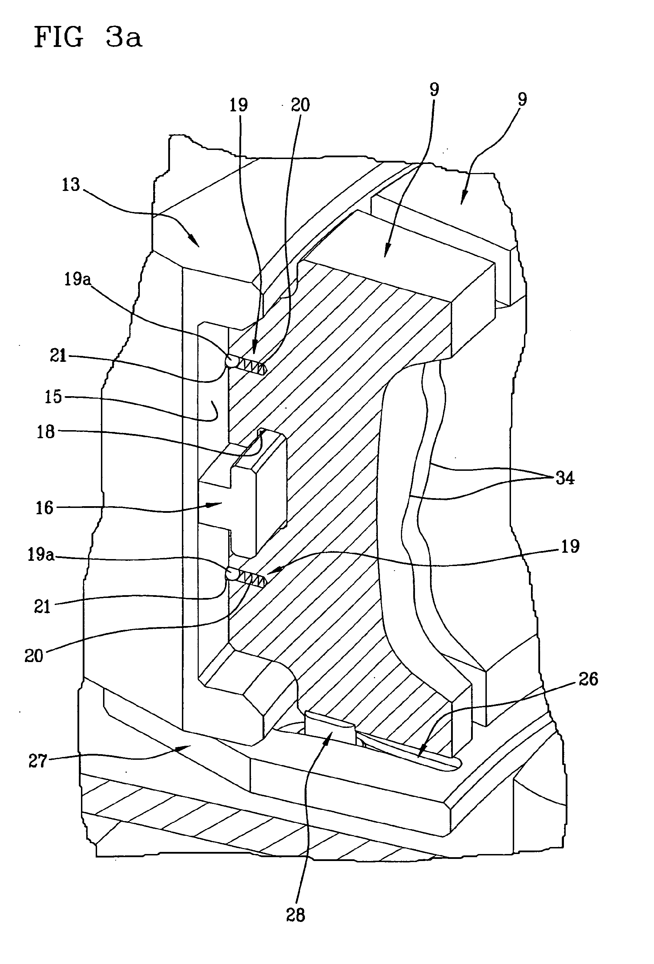

In fact, base 5 and the closing portion 6, together with the respective lower 4a and upper 4b half-shells, are mutually movable between an open condition (Fig. 3 and 4) in which they are mutually spaced apart to allow introduction of tyre 7 to be vulcanised into mould 2, and a closed position in which they are arranged mutually close to each other and in mating relationship (Fig. 1 and 2), to enclose tyre 7 (seen in Fig. 2) in a moulding cavity 8 having inner walls reproducing the geometric contour to be given to tyre 7 at the end of the vulcanisation and moulding process.

In detail, the half-shells 4a, 4b face each other and have lateral portions designed to act against the opposite sides of tyre 7, so as to form the outer surfaces of the tyre sidewalls.

Mould 2 further comprises at least one ring of circumferential sectors 9 circumscribing the moulding cavity 8 and designed to act on a radially external surface of a tread band 10 of tyre 7, so as to create a series of cuts and longitudinal and/or transverse grooves therein, which are suitably disposed according to a desired "tread pattern".

To this aim, the circumferential sectors 9 carry forming elements in relief 11 (only shown in Fig, 2, for the sake of simplicity) facing said geometric axis "X-X" of the moulding cavity 8, and designed to act on the tread band 10.

In the moulds designed for vulcanisation of tyres of the winter type, in order to make narrow cuts or sipes, the elements in relief 11 of the circumferential sectors 9 comprise a plurality of blades, not shown, projecting from the inner surface delimiting the moulding cavity.

The blades have each a work portion protruding from the inner surface and adapted to form a corresponding sipe on the vulcanised tyre 7.

The sipes are preferably disposed consecutively close to each other in a circumferential direction and oriented in a direction substantially transverse to the rolling direction. The function of these sipes is substantially to efficiently collect and retain the snow during rolling of the tyre, since friction of snow-against-snow is, as known, stronger than friction of rubber-against-snow.

Preferably, the blades are arranged in parallel circumferential rows. The blades of each row are disposed consecutively close to each other in a circumferential direction and oriented in a direction substantially transverse to an equatorial plane of the tyre.

Also associated with the circumferential sectors 9 are actuating devices 12 adapted to cause radial translation of the circumferential sectors 9 between a first work condition in which, as shown in Figs. 3 and 4, they are radially spaced apart relative to the geometric axis "X-X" of the moulding cavity 8, and a second work condition in which, as shown in Figs. 1 and 2, the circumferential sectors 9 are moved radially close to said geometric axis "X-X", preferably in circumferential abutment relationship against each other.

More particularly, in the first work condition the forming elements in relief 11 carried by the circumferential sectors 9 are radially spaced apart from the radially external surface of the tread band 10 of tyre 7 located in the moulding cavity 8.

As shown in Figs. 1 and 2, in the second work condition the circumferential sectors 9, on the contrary, are disposed radially close to each other so that the forming elements in relief 11 penetrate at least partly into the tread band 10.

The actuating devices 12 comprise a plurality of circumferential sector-carriers 13 arranged to a radially external position relative to the circumferential sectors 9 and each adapted to support at least two of said sectors 9.

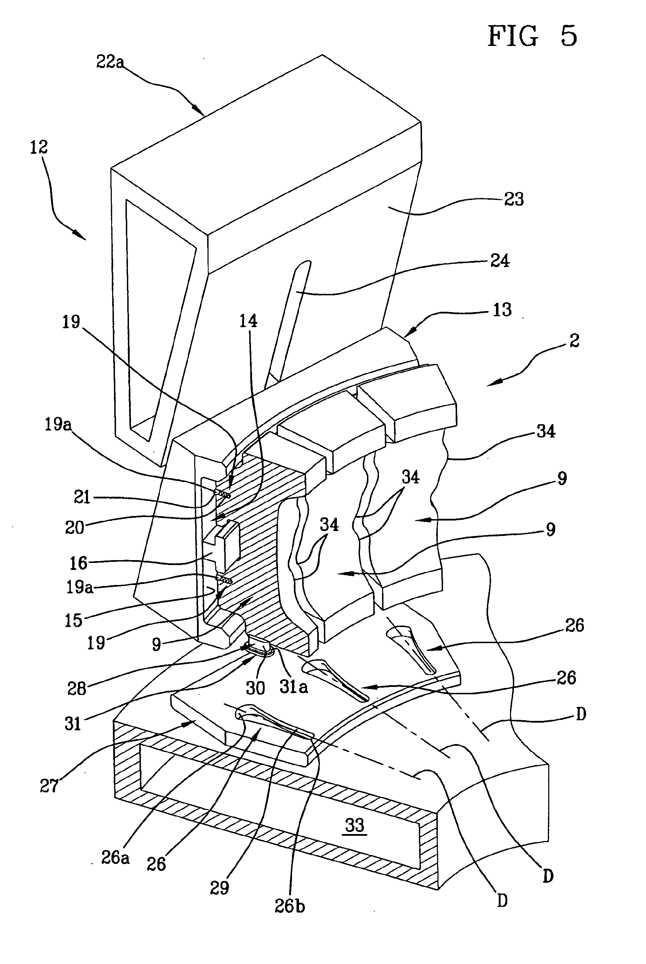

In the embodiment shown in the accompanying figures, apparatus 1 comprises eight sector carriers 13 (only two of which are shown in Figs. 1 and 3, only one in Fig. 5), each carrying three sectors 9 consecutively disposed relative to each other along the circumferential extension of the sector carriers 13. Each sector 9 therefore subtends an angle of about fifteen degrees.

Preferably, the number of circumferential sector carriers 13 is in the range of six to twelve. The number of circumferential sectors 9 for each circumferential sector carrier 13 is included between two and seven. In addition, the angle subtended by each of sectors 9 is preferably included between about 10° and about 30°.

The sector carrier 13 at a radially internal portion thereof has a housing 14 of arched shape (Fig. 5) having a bottom surface 15 on which an arched guide 16 defined by a ridge with T-shaped cross section is defined.

Sectors 9 are each partly inserted in housing 14 and at a radially external surface 17 thereof have a groove 18 the shape of which matches that of ridge 16 and is opening on opposite circumferential faces of said sector 9. Ridge 16 is slidably inserted in groove 18 so that sector 9 can move along a circumferential path on the sector carrier 13 but cannot move radially relative to the latter.

According to an alternative embodiment not shown, the arched guide 16 defined by the ridge having a T-shaped cross-section is positioned on each sector 9 and is slidably inserted in a groove 18 formed in the bottom surface 15.

On its radially external surface 17, sector 9 further has locking devices 19 to make it integral with the respective sector carrier 13 when it is in the first work condition, as detailed in the following.

In the embodiment shown, the locking devices 19 are defined by balls 19a inserted in holes formed in the radially external surface 17 with interposition of a spring 20. The hole aperture is smaller than the diameter of ball 19a, and spring 20 constantly pushes ball 19a towards said aperture.

The locking devices 19 further comprises seats 21 formed in the bottom surface 15 of the sector carrier 13 and adapted to house the ball 19a portions jutting out of the radially external surface 17.

Sectors 9 have each two balls 19a mutually aligned along an axial direction and susceptible of engagement in two corresponding seats 21.

The pairs of seats 21 are angularly spaced apart the same distance on the sector carrier 13 by an angle greater than the angle subtended by each of sectors 9, so that locking of sectors 9 takes place when they are mutually spaced apart on the sector carrier 13.

According to an alternative embodiment not shown, balls 19 are elastically housed in seats formed in the circumferential sector carriers 13 and can be housed in recesses 21 formed in the circumferential sectors 9.

According to an embodiment not shown, if the number of sectors 9 for each sector carrier 13 is an odd number, the central sector 9 must not move relative to the sector carrier 13 on which it is mounted and therefore can be integral therewith.

The actuating devices 12 further comprise a driving ring 22 axially movable relative to the moulding cavity 8 and having at least one radially internal frustoconical surface 23 slidably engaging the circumferential sector carriers 13, so as to determine radial translation of the circumferential sectors 9 between the first and the second work conditions, following axial movement of the driving ring 22.

Axial movement of said driving ring 22 can be obtained by fluid-operated actuators not shown, for example.

In more detail, a slide guide 24 couples the radially internal frustoconical surface of the driving ring 22 to a radially external surface 25 of a respective circumferential sector carrier 13.

As shown, ring 22 is made up of a plurality of elements 22a the number of which is the same as the number of the sector carriers 13, which are disposed crown-wise and secured to the closing portion 6. Elements 22a each have a radially internal flat surface 23 coupled to the radially external surface 25 of a respective circumferential sector carrier 13 through the slide guide 24. Therefore, said frustoconical surface is actually formed of a plurality of flat surfaces disposed close to each other.

The actuating devices 12 further comprise guides 26 disposed in a radial direction relative to the geometric axis "X-X", directly in engagement with the circumferential sectors 9 and adapted to guide said circumferential sectors 9 along radial directions "D" (Fig. 5) on passing between the first and the second work conditions.

In more detail, as shown in the accompanying drawings, at each of the circumferential sector carriers 13 there is a guide body 27 defined by a plate integral with base 5 and therefore fixed relative to the geometric axis "X-X". In the illustrated instance there are four guide plates 27 (only two of which are shown in Fig. 3) disposed around said geometric axis "X-X".

Alternatively, the guide body 27 can be defined by a single annular plate, concentric with the geometric axis "X-X", carrying the guides 26 for all the circumferential sectors 9.

Each guide body 27 has grooves defining said radial guides 26 and each circumferential sector 9 comprises a respective pin 28 integral therewith and slidably engaged in a respective groove 26. The guide body 27 herein illustrated has three radial grooves each of them receiving one of the pins 28 of the three circumferential sectors 9.

Each groove 26 preferably has a tapering shape starting from a radially outermost end 26a thereof towards a radially innermost end 26b thereof (Fig. 5).

In addition, each groove 26 comprises a retaining edge 29 partly extending towards the inside of said groove 26.

Pin 28 comprises a shank 39 that at a distal end thereof carries a head 31 having greater sizes than shank 30.

Head 31 further has a width, measured along a circumferential direction, greater than the distance between two opposite portions of the edge 29 of groove 26 measured at the radially innermost end 26b. Therefore, once head 31 has been axially inserted in groove 26, at the radially outermost end 26a thereof where groove 26 is larger, and brought close to edge 29, i.e. towards the radially innermost end 26b, pin 28 cannot be axially drawn out of said groove 26.

In fact, with reference to Fig. 2, head 31 keeps a position under the edge 29 with an edge 31a thereof (better shown in Fig. 5) that, in an attempt to axially draw pin 28 out, comes in abutment against said edge 29 of groove 26.

In addition, said edge 29 is absent at an end region placed close to the radially outermost end 26a of groove 26, so as to facilitate passage of the pin head 31. In the first work condition therefore the circumferential sectors 9 can be axially disengaged from the respective radial guides 26.

Furthermore, pin 28 seen in cross-section has an elongated shape in the direction of groove 26. Alternatively, pin 28 can have a circular section.

According to an alternative embodiment not shown, the guide body carries pins 28, and the grooves 26 are formed in the circumferential sectors 9.

Apparatus 1 further contemplates optional use of at least one toroidal support 32 (Fig. 2) of metal material or other substantially rigid material, having an outer surface substantially reproducing the shape of the inner surface of tyre 7.

Also present in apparatus 1 are devices designed to supply heat to mould 2 and therefore to tyre 7, preferably in the form of a plurality of ducts 33 through which a heating fluid passes and which are respectively associated with the half-shells 4a, 4b and/or the circumferential sectors 9.

According to a preferred embodiment, the circumferential sectors 9 have edges 34 designed to come into mutual contact in the second work condition, and such shaped as to follow the pattern of the tread band 10 without interrupting the forming elements in relief 11. In particular, preferably, these edges 34 extend along an axial direction and run parallel to the forming elements in relief, in side by side relationship therewith, so as to ensure the continuity of each element in relief placed close to one end of the sector.

In accordance with the process of the present invention, the toroidal support 32 supporting the green tyre 7 is transferred, either manually or with the aid of a robotized arm (not shown) or otherwise, onto base 5 of mould 2. In particular, one sidewall of tyre 7 is laid on the lower half-shell 4a.

Subsequently, the casing 3 with the driving ring 22, the circumferential sector carriers 13 and the circumferential sectors 9 is brought over the tyre and centred relative to the geometric axis "X-X".

In this condition, the circumferential sector carriers 13 lie at a lower last end of the driving ring 22, are circumferentially spaced apart from each other and are arranged in a radially open position.

The circumferential sectors 9 belonging to each of the sector carriers 13 are locked on the sector carriers 13, with balls 19a jutting out of the radially external surface 17 that are fitted in the seats 21 formed in the bottom surface 15 of the sector carrier 13 and are circumferentially spaced apart from each other (Fig. 5).

The mould 2 is then closed by lowering the casing 3, driving ring 22, circumferential sector carriers 13 and circumferential sectors 9 as far as pins 28 are inserted into the outer ends 26a of grooves 26 (Figs. 3 and 4) .

The casing and driving ring 22 continue their translation downwards and the sector carriers 13 resting on base 5 are pushed by the frustoconical surface 23 towards the geometric axis "X-X".

Balls 19a jut out of seats 21 and sectors 9 are closed, being radially guided by sliding of pins 28 in grooves 26 and moving from the first work condition to the second work condition until the forming elements in relief 11 penetrate into the radially external surface of the tread band 10 and the engagement edges 34 of sectors 9 come into mutual contact (Figs. 1 and 2).

During the centripetal closure, sectors 9 are maintained coplanar with each other and with base 5 by the heads 31 of pins 28 in engagement with the retaining edges 29 of grooves 26.

Simultaneously, the upper half-shell 4b carried by casing 3 is positioned against the upper sidewall of tyre 7.

Once mould 2 has been closed, heat is supplied thereto and vulcanisation of tyre 7 is carried out.

Once vulcanisation has been completed, casing 3 and the driving ring 22 are lifted while sectors 9 are axially locked by pins 28. The interaction between the radially internal frustoconical surface 23 of the driving ring 22 and the radially external surface 25 of each of the circumferential sector carriers 13 by means of the slide guide 24 causes radial opening of the sector carriers 13 and sectors 9, through sliding of pins 28 in guides 26.

Also during radial opening and until full detachment of the elements in relief 11 from tyre 7, sectors 9 are maintained coplanar with each other and with base 5 by the heads 31 of pins 28 in engagement with the retaining edges 29 of grooves 26.

When pins 28 come close to the radially external ends 26a of grooves 26, being no longer retained by the retaining edges 29, they can be axially drawn out of said grooves 26.

Further lifting of casing 3 and of the driving ring 22, therefore, makes pins 28 come out of grooves 26 and causes sectors 9 and sector carriers 13 to axially move away from tyre 7, while sectors 9 are locked again on the respective sector carriers 13 by balls 19a fitting in the respective seats 21 (Fig. 5).

The vulcanised tyre 7 can therefore be removed from mould 2.

## Claims

1. A process for moulding and vulcanisation of tyres, comprising:
- preparing a green tyre (7) to be vulcanised comprising a tread band (10) having a radially external surface;
- positioning the green tyre (7) on a lower half-shell (4a) of a vulcanisation mould (2) located on a base (5) of a moulding and vulcanisation apparatus (1) and having a geometric axis (X-X), said base (5) comprising guides (26) radially disposed relative to the geometric axis (X-X);
- bringing a plurality of circumferential sectors (9) and a plurality of circumferential sector carriers (13), each of them carrying at least two of said circumferential sectors (9), over the green tyre (7) and centred relative to the geometric axis "X-X";
- engaging the plurality of circumferential sectors (9), by an axial movement, in said radial guides (26), which sectors can be centripetally moved close to each other and carry elements in relief (11) for forming a tread pattern, which elements are turned towards the geometric axis (X-X);
- axially moving a driving ring (22) towards the base (5), said ring having a conical surface (23) slidably engaging the plurality of circumferential sector carriers (13), so as to determine radial translation of the circumferential sectors (9) in the radial guides (26) from a first work condition, in which the forming elements in relief (11) are radially spaced apart from the radially external surface of the tread band (10) of the tyre (7), and a second work condition, in which the forming elements in relief (11) penetrate at least partly into the radially external surface of the tread band (10);
- supplying heat to the tyre (7) penetrated by the forming elements in relief (11) of the circumferential sectors (9).

2. A process as claimed in the preceding claim, wherein at least in the second work condition, the circumferential sectors (9) are axially locked in the radial guides (26).

3. A process as claimed in claim 2, wherein during radial translation of the circumferential sectors (9) in the radial guides (26) from the first work condition to the second work condition, said circumferential sectors (9) are axially locked in said radial guides (26).

4. A process as claimed in claim 1, wherein the step of engaging the circumferential sectors (9) in the radial guides (26) comprises the step of axially inserting pins (28) integral with the circumferential sectors (9) into grooves formed in a guide body (27) that is fixed relative to the geometric axis (X-X).

5. A process as claimed in claim 4, wherein during radial translation of the circumferential sectors (9) in the radial guides (26) from the first work condition to the second work condition, each of the pins (28) runs in the respective groove substantially starting from a radially external end (26a) of the groove (26) towards a radially internal end (26b) of said groove (26).

6. A process as claimed in claim 5, wherein during radial translation of the circumferential sectors (9) in the radial guides (26) from the first work condition to the second work condition, one head (31) belonging to each pin (28) engages a retaining edge (29) of the respective groove (26), said edge (29) preventing the pin (28) from being axially drawn out of the groove.

7. A process as claimed in claim 1, wherein during radial translation of the circumferential sectors (9) in the radial guides (26) from the first work condition to the second work condition, the circumferential sectors (9) carried by each of the circumferential sector carriers (13) move close to each other on the respective sector carrier (13) along a circumferential direction (D) related to said sector carrier (13).

8. A process as claimed in claim 1, further comprising the steps of:
- axially moving the driving ring (22) away from the base (5) to determine radial translation of the circumferential sectors (9) in the radial guides (26) from the second work condition to the first work condition;
- drawing the circumferential sectors (9) out of the radial guides (26) by an axial movement.

9. A process as claimed in claim 8, wherein starting from the second work condition and for at least one length of the radial translation from said second work condition to the first work condition, the circumferential sectors (9) are axially locked in the radial guides (26).

10. A process as claimed in claim 8, wherein during radial translation of the circumferential sectors (9) in the radial guides (26) from the second work condition to the first work condition, pins (28) integral with the circumferential sectors (9) run in the respective grooves (26) formed in a guide body (27) that is fixed relative to the geometric axis (X-X), starting from radially internal ends (26b) of the grooves (26) towards radially external ends (26a) of said grooves (26).

11. A process as claimed in claim 10, wherein the step of drawing the circumferential sectors (9) out of the radial guides (26) comprises the step of axially drawing the pins (28) out of the radially external ends (26a) of said grooves (26).

12. A process as claimed in claim 10, wherein starting from the second work condition and for at least one length of the radial translation from said second work condition to the first work condition, one head (31) belonging to each pin (28) engages a retaining edge (29) of the respective groove (26), said edge (29) preventing the pin (28) from being axially drawn out of the groove (26).

13. A process as claimed in claim 12, wherein before drawing the circumferential sectors (9) out of the radial guides (26), the head (31) of each pin (28) is disengaged from the retaining edge (29) of the respective groove (26).

14. A process as claimed in claim 8, wherein during radial translation of the circumferential sectors (9) in the radial guides (26) from the second work condition to the first work condition, the circumferential sectors (9) carried by each of the circumferential sector carriers (13) move away from each other on the respective sector carrier (13) along a circumferential direction related to said sector carrier (13).

15. An apparatus for moulding and vulcanisation of tyres, comprising:
- a vulcanisation mould (2) having a moulding cavity (8) with walls the shape of which matches that of a green tyre (7) being processed comprising a tread band (10) having a radially external surface; said moulding cavity (10) being circumscribed by circumferential sectors (9) adapted to be centripetally approached and carrying elements in relief (11) for forming a tread pattern, which elements are turned towards a geometric axis (X-X) of the moulding cavity (8);
- actuating devices (12) to cause translation of the circumferential sectors (9) between a first work condition in which the forming elements in relief (11) are radially spaced apart from the radially external surface of the tread band (10) of the tyre (7), and a second work condition, in which the forming elements in relief (11) penetrate at least partly into the radially external surface of the tread band (10);
wherein said actuating devices (12) comprise:
- a plurality of radially movable circumferential sector carriers (13), each of them carrying at least two circumferential sectors (9), wherein said at least two circumferential sectors (9) are movable on the respective sector-carrier (13) along a circumferential direction related to said sector-carrier (13);
- a driving ring (22) having a conical surface (23) slidably engaging said circumferential sector carriers (13), to determine translation of the circumferential sectors (9) between said first and second work conditions, following an axial movement of the driving ring (22);
**characterised in that** it further comprises a base (5) comprising:
- guides (26) radially disposed relative to the geometric axis (X-X), wherein in the first work condition the circumferential sectors (9) can be axially engaged in or axially disengaged from the respective radial guides (26) and wherein the guides (26) are adapted to guide said circumferential sectors (9) along radial directions on passing between the first and the second work conditions.

16. An apparatus as claimed in claim 15, comprising locking devices (19) interposed between the circumferential sectors (9) and the respective circumferential sector carrier (13) and adapted to lock the circumferential sectors (9) relative to the respective circumferential sector carrier (13) at least when said circumferential sectors (9) are in the first work condition.

17. An apparatus as claimed in the preceding claim, wherein the locking devices (19) comprise at least one ball (19a) elastically housed in a respective seat formed in the circumferential sector (9) and adapted to be housed in a recess (21) formed in the circumferential sector carrier (13).

18. An apparatus as claimed in claim 16, wherein the locking devices (19) comprise at least one ball (19a) elastically housed in a respective seat formed in the circumferential sector carrier (13) and adapted to be housed in a recess (21) formed in the circumferential sector (9).

19. An apparatus as claimed in claim 15, wherein the radial guides (26) consist of grooves (26) slidably coupled to pins (28).

20. An apparatus as claimed in the preceding claim, comprising a guide body (27) that is fixed relative to the geometric axis (X-X) and carries the grooves (26), wherein the pins (28) are integral with the circumferential sectors (9).

21. An apparatus as claimed in claim 19, comprising a guide body (27) that is fixed relative to the geometric axis (X-X) and carries the pins (28), wherein the grooves (26) are formed in the circumferential sectors (9).

22. An apparatus as claimed in claim 19, wherein each groove (26) has a tapering shape starting from a radially external end (26a) thereof towards a radially internal end (26b) thereof.

23. An apparatus as claimed in claim 19, wherein each pin (28) seen in cross section has an elongated shape in the groove (26) direction.

24. An apparatus as claimed in claim 19, wherein each pin (28) has a head (31) and each groove (26) has a retaining edge (29) engaging the head (31), to prevent the pin (28) from being axially drawn out of the groove (26).

25. An apparatus as claimed in the preceding claim, wherein each groove (26) has an end region without the retaining edge (29), to enable the pin (28) to be axially drawn out of the respective groove (26) in the first work condition.

## Patentansprüche

1. Verfahren zum Formen und Vulkanisieren von Reifen mit:
- dem Vorbereiten eines Rohreifens (7), der zu vulkanisieren ist, mit einem Laufflächenband (10), das eine radial äußere Oberfläche aufweist,
- dem Positionieren des Rohreifens (7) an einer unteren Halbschale (4a) einer Vulkanisierungsform (2), die auf einer Basis (5) einer Formungs- und Vulkanisierungsvorrichtung (1) vorgesehen ist und die eine geometrische Achse (X-X) aufweist, wobei die Basis (5) Führungen (26) aufweist, die radial bezüglich der geometrischen Achse (X-X) vorgesehen sind,
- dem Bringen von mehreren Umfangssektoren (9) und mehreren Umfangssektorträgern (13), von denen jeder wenigstens zwei Umfangssektoren (9) trägt, über den Rohreifen (9) und bezüglich der geometrischen Achse "X-X" zentriert,
- dem in Eingriff Bringen der mehreren Umfangssektoren (9) durch eine axiale Bewegung in den radialen Führungen (26), wobei die Sektoren zentripetal nahe zueinander bewegt werden können und sie Reliefelemente (11) tragen, um ein Laufflächenmuster auszubilden, wobei die Elemente zu der geometrischen Achse (X-X) hin gerichtet sind,
- dem axialen Bewegen eines Antriebsrings (22) zu der Basis (5) hin, wobei der Ring eine konische Oberfläche (23) aufweist, welche verschiebbar mit den mehreren Umfangssektorträgern (13) eingreift, um so eine radiale Versetzung der Umfangssektoren (9) in den radialen Führungen (26) zwischen einem ersten Arbeitszustand, in dem die Reliefformungselement (11) radial von der radial äußeren Oberfläche des Laufflächenbands (10) des Reifens (7) beabstandet sind, und einem zweiten Arbeitszustand zu verursachen, in dem die Reliefformungselemente (11) wenigstens teilweise in die radial äußere Oberfläche des Laufflächenbands (10) eindringen,
- dem Zuführen von Wärme zu dem Reifen (7), der durch die Reliefformungselemente (11) der Umfangssektoren (9) durchdrungen wird.

2. Verfahren nach dem vorhergehenden Anspruch, bei dem wenigstens in dem zweiten Arbeitszustand die Umfangssektoren (9) axial in den radialen Führungen (26) arretiert sind.

3. Verfahren nach Anspruch 2, bei dem während der radialen Versetzung der Umfangssektoren (9) in den radialen Führungen (26) vom ersten Arbeitszustand zum zweiten Arbeitszustand die Umfangssektoren (9) axial in den radialen Führungen (26) arretiert sind.

4. Verfahren nach Anspruch 1, bei dem der Schritt des In-Eingriff-Bringens der Umfangssektoren (9) in den radialen Führungen (26) den Schritt des axialen Einführens von Stiften (28), die mit den Umfangssektoren (9) einstückig sind, in Nuten aufweist, die in einem Führungskörper (27) ausgebildet sind, der bezüglich der geometrischen Achse (X-X) fest ist.

5. Verfahren nach Anspruch 4, bei dem sich während der radialen Versetzung der Umfangssektoren (9) in den radialen Führungen (26) vom ersten Arbeitszustand zum zweiten Arbeitszustand jeder Stift (26) in der jeweiligen Nut bewegt, angefangen von einem radial äußeren Ende (26a) der Nut (26) zu einem radial inneren Ende (26b) der Nut (26) hin.

6. Verfahren nach Anspruch 5, bei dem während der radialen Versetzung der Umfangssektoren (9) in den radialen Führungen (26) vom ersten Arbeitszustand zum zweiten Arbeitszustand ein Kopf (31), der zu jedem Stift (28) gehört, mit einer Rückhaltekante (29) der jeweiligen Nut (26) eingreift, wobei die Kante (29) den Stift (28) daran hindert, axial aus der Nut herausgezogen zu werden.

7. Verfahren nach Anspruch 1, bei dem sich während der radialen Versetzung der Umfangssektoren (9) in den radialen Führungen (26) vom ersten Arbeitszustand zum zweiten Arbeitszustand die Umfangssektoren (9), die durch jeden der Umfangssektorträger (13) getragen werden, auf den jeweiligen Sektorträgern (13) entlang einer Umfangsrichtung (D), die mit dem Träger (13) in einer Beziehung steht, näher zueinander bewegen.

8. Verfahren nach Anspruch 1, ferner mit den Schritten des:
- axialen Bewegens des Antriebsrings (22) weg von der Basis (5), um eine radiale Versetzung der Umfangssektoren (9) in den radialen Führungen (26) vom zweiten Arbeitszustand zum ersten Arbeitszustand zu verursachen,
- Ziehens der Umfangssektoren (9) aus den radialen Führungen (26) durch eine axiale Bewegung.

9. Verfahren nach Anspruch 8, bei dem, angefangen von dem zweiten Arbeitszustand und für wenigstens eine Länge der radialen Versetzung vom zweiten Arbeitszustand zum ersten Arbeitszustand, die Umfangssektoren (9) axial in den radialen Führungen (26) arretiert sind.

10. Verfahren nach Anspruch 8, bei dem während der radialen Versetzung der Umfangssektoren (9) in den radialen Führungen (26) vom zweiten Arbeitszustand zum ersten Arbeitszustand Stifte (28), die mit den Umfangssektoren (9) einstückig sind, in den jeweiligen Nuten (26) laufen, die in einem Führungskörper (27) ausgebildet sind, der bezüglich der geometrischen Achse (X-X) fest ist, angefangen von radial inneren Enden (26b) der Nuten (26) zu radial äußeren Enden (26a) der jeweiligen Nuten (26) hin.

11. Verfahren nach Anspruch 10, bei dem der Schritt des Herausziehens der Umfangssektoren (9) aus den radialen Führungen (26) den Schritt des axialen Herausziehens der Stifte (28) aus den radial äußeren Enden (26a) der Nuten (26) aufweist.

12. Verfahren nach Anspruch 10, bei dem beginnend von dem zweiten Arbeitszustand und für wenigstens eine Länge der radialen Versetzung vom zweiten Arbeitszustand zum ersten Arbeitszustand ein Kopf (31), der zu jedem Stift (28) gehört, mit einer Rückhaltekante (29) der jeweiligen Nut (26) eingreift, wobei die Kante (29) den Stift (28) daran hindert, axial aus der Nut (26) herausgezogen zu werden.

13. Verfahren nach Anspruch 12, bei dem vor dem Herausziehen der Umfangssektoren (9) aus den radialen Führungen (26) der Kopf (31) jedes Stifts (28) mit der Rückhaltekante (29) der jeweiligen Nut (26) außer Eingriff gebracht wird.

14. Verfahren nach Anspruch 8, bei dem während der radialen Versetzung der Umfangssektoren (9) in den radialen Führungen (26) von dem zweiten Arbeitszustand zu dem ersten Arbeitszustand die Umfangssektoren (9), die durch jeden der Umfangssektorenträger (13) getragen werden, sich voneinander auf dem jeweiligen Sektorträger (13) entlang einer Umfangsrichtung, die mit dem Sektorträger (13) in einer Beziehung steht, weg bewegen.

15. Vorrichtung zum Formen und Vulkanisieren von Reifen mit:
- einer Vulkanisierungsform mit einem Formungshohlraum (8) mit Wänden, deren Gestalt zu einem Rohreifen (7), der bearbeitet wird, der ein Laufflächenband (10) mit einer radial äußeren Oberfläche aufweist, passt, wobei der Formungshohlraum (10) durch Umfangssektoren (9) umgeben wird, welche dafür angepasst sind, zentripetal angenähert zu werden und welche jeweils Reliefelemente (11) zum Ausbilden eines Laufflächenmusters aufweisen, wobei die Elemente zu einer geometrischen Achse (X-X) des Formungshohlraums (8) hin gerichtet sind,
- Betätigungseinrichtungen (12), um eine Versetzung der Umfangssektoren (9) zwischen einem ersten Arbeitszustand, in dem die Reliefformungselemente (11) von der radial äußeren Oberfläche des Laufflächenbands (10) des Reifens (7) radial beabstandet sind, und einem zweiten Arbeitszustand zu verursachen, in dem die Reliefformungselemente (11) wenigstens teilweise in die radial äußere Oberfläche des Laufflächenbands (10) eindringen,
wobei die Betätigungseinrichtungen (12) aufweisen:
- mehrere radial bewegliche Umfangssektorträger (13), von denen jeder wenigstens zwei Umfangssektoren (9) trägt, wobei die wenigstens zwei Umfangssektoren (9) auf dem jeweiligen Sektorträger (13) entlang einer Umfangsrichtung beweglich sind, die mit dem Sektorträger (13) in einer Beziehung steht,
- einen Antriebsring (22) mit einer konischen Oberfläche (23), welche mit den Umfangssektorträgern (13) verschiebbar eingreift, um eine Versetzung der Umfangssektoren (9) zwischen dem ersten und dem zweiten Arbeitszustand in der Folge einer axialen Bewegung des Antriebsrings (22) zu verursachen,
**dadurch gekennzeichnet, dass** sie ferner eine Basis (5) aufweist mit:
- Führungen (26), die radial bezüglich der geometrischen Achse (X-X) vorgesehen sind, wobei in dem ersten Arbeitszustand die Umfangssektoren (9) axial in Eingriff mit oder axial außer Eingriff von den jeweiligen radialen Führungen (26) sein können und wobei die Führungen (26) angepasst sind, die Umfangssektoren (9) entlang radialer Richtungen beim Übergang zwischen dem ersten und dem zweiten Arbeitszustand zu führen.

16. Vorrichtung nach Anspruch 15, mit Arretiereinrichtungen (19), welche zwischen den Umfangssektoren (9) und den jeweiligen Umfangssektorträgern (13) eingefügt sind und die dafür angepasst sind, die Umfangssektoren (9) bezüglich der jeweiligen Umfangssektorträger (13) wenigstens dann zu arretieren, wenn die Umfangssektoren (9) im ersten Arbeitszustand sind.

17. Vorrichtung nach dem vorhergehenden Anspruch, bei der die Arretiereinrichtungen (19) wenigstens eine Kugel (19a) aufweisen, die elastisch in einen jeweiligen Sitz aufgenommen ist, der in dem Umfangssektor (9) ausgebildet ist und sie dafür angepasst ist, in eine Ausnehmung (21) aufgenommen zu werden, die in dem Umfangssektorträger (13) ausgebildet ist.

18. Vorrichtung nach Anspruch 16, bei der die Arretiereinrichtungen (19) wenigstens eine Kugel (19a) aufweisen, die elastisch in einen jeweiligen Sitz aufgenommen ist, der in dem Umfangssektorträger (13) ausgebildet ist, und sie dafür angepasst ist, in eine Ausnehmung (21) aufgenommen zu werden, die in dem Umfangssektor (9) ausgebildet ist.

19. Vorrichtung nach Anspruch 15, bei der die radialen Führungen (26) aus Nuten (26) bestehen, welche gleitbar mit Stiften (28) gekoppelt sind.

20. Vorrichtung nach dem vorhergehenden Anspruch, mit einem Führungskörper (27), der bezüglich der geometrischen Achse (X-X) fest ist und der die Nuten (26) trägt, wobei die Stifte (28) mit den Umfangssektoren (9) einstückig sind.

21. Vorrichtung nach Anspruch 19, mit einem Führungskörper (27), der bezüglich der geometrischen Achse (X-X) fest ist und der die Stifte (28) trägt, wobei die Nuten (26) in den Umfangssektoren (9) ausgebildet sind.

22. Vorrichtung nach Anspruch 19, bei der jede Nut (26) eine angefaste Gestalt aufweist, angefangen von einem radial äußeren Ende (26a) von dieser zu einem radial inneren Ende (26b) von dieser hin.

23. Vorrichtung nach Anspruch 19, bei der jeder Stift (28), wenn im Querschnitt betrachtet, eine längliche Gestalt in der Richtung der Nut (26) aufweist.

24. Vorrichtung nach Anspruch 19, bei der jeder Stift (28) einen Kopf (31) aufweist und jede Nut (26) eine Rückhaltekante (29) aufweist, die mit dem Kopf (31) in Eingriff tritt, um den Stift (28) daran zu hindern, axial aus der Nut (26) herausgezogen zu werden.

25. Vorrichtung nach dem vorhergehenden Anspruch, bei der jede Nut (26) einen Endbereich ohne Rückhaltekante (29) aufweist, um es dem Stift (28) zu ermöglichen, axial aus der jeweiligen Nut (26) im ersten Arbeitszustand herausgezogen zu werden.

## Revendications

1. Procédé pour moulage et vulcanisation de pneus, comprenant:
- préparer un pneu vert (7) à vulcaniser comprenant une bande de roulement (10) ayant une surface externe radialement ;
- positionner le pneu vert (7) sur une demi-coquille inférieure (4a) d'un moule de vulcanisation (2) situé sur une base (5) d'un appareil de moulage et vulcanisation (1) et ayant un axe géométrique (X-X), ladite base (5) comprenant des guides (26) disposés radialement par rapport à l'axe géométrique (X-X) ;
- apporter une pluralité de secteurs circonférentiels (9) et une pluralité de supports de secteur circonférentiel (13), chacun d'eux supportant au moins deux desdits secteurs circonférentiels (9), sur le pneu vert (7) et centrés par rapport à l'axe géométrique (X-X) ;
- mettre en prise la pluralité de secteurs circonférentiels, par un déplacement axial, dans lesdits guides radiaux (26), lesquels secteurs peuvent être déplacés proches les uns des autres de façon centripète et porter des éléments de relief (11) pour former un motif de bande de roulement, lesquels éléments sont tournés vers l'axe géométrique (X-X) ;
- déplacer axialement une bague d'entraînement (22) vers la base (5), ladite bague ayant une surface conique (23) mise en prise de manière coulissante avec la pluralité de supports de secteur circonférentiel (13), de manière à déterminer une translation radiale des secteurs circonférentiels (9) dans les guides radiaux (26) à partir d'un premier état de fonctionnement, dans lequel les éléments de formage en relief (11) sont radialement espacés de la surface externe radialement de la bande roulement (10) du pneu (7), et d'un deuxième état de fonctionnement dans lequel les éléments de formage en relief (11) pénètrent au moins en partie dans les surfaces externes radialement de la bande de roulement (10) ;
- fournir de la chaleur au pneu (7) pénétré par les éléments de formage en relief (11) des secteurs circonférentiels (9).

2. Procédé selon la revendication précédente, dans lequel au moins dans le deuxième état de fonctionnement, les secteurs circonférentiels (9) sont axialement verrouillés dans les guides radiaux (26).

3. Procédé selon la revendication 2, dans lequel durant une translation radiale des secteurs circonférentiels (9) dans les guides radiaux (26) depuis le premier état de fonctionnement vers le deuxième état de fonctionnement, lesdits secteurs circonférentiels (9) sont verrouillés axialement dans lesdits guides radiaux (26).

4. Procédé selon la revendication 1, dans lequel l'étape de mise en prise des secteurs circonférentiels (9) dans les guides radiaux (26) comprend l'étape d'insertion axiale de broches (28) solidaires des secteurs circonférentiels (9) dans des rainures formées dans un corps de guidage (27) qui est fixé par rapport à l'axe géométrique (X-X).

5. Procédé selon la revendication 4, dans lequel pendant une translation radiale des secteurs circonférentiels (9) dans les guides radiaux (26) depuis le premier état de fonctionnement vers le deuxieme état de fonctionnement, chacune des broches (28) fonctionne dans la rainure respective commençant sensiblement depuis une extrémité externe radialement (26a) de la rainure (26) vers une extrémité interne radialement (26b) de ladite rainure (26).

6. Procédé selon la revendication 5, dans lequel pendant une translation radiale des secteurs circonférentiels (9) dans les guides radiaux (26) depuis le premier état de fonctionnement vers le deuxième état de fonctionnement, une tête (31) appartenant à chaque broche (28) se met en prise avec un bord de retenue (29) de la rainure respective (26), ledit bord (29) empêchant la broche (28) d'être axialement sortie de la rainure.

7. Procédé selon la revendication 1, dans lequel pendant la translation radiale des secteurs circonférentiels (9) dans les guides radiaux (26) depuis le premier état de fonctionnement vers le deuxième état de fonctionnement, les secteurs circonférentiels (9) portés par chacun des supports de secteur circonférentiel (13) se déplacent proches les uns des autres sur le support de secteur respectif (13) le long d'une direction circonférentielle (D) par rapport audit support de secteur (13).

8. Procédé selon la revendication 1, comprenant en outre les étapes de :
- éloigner axialement la bague d'entraînement (22) de la base (5) pour déterminer une translation radiale des secteurs circonférentiels (9) dans les guides radiaux (26) depuis le premier état de fonctionnement vers le deuxième état de fonctionnement;
- tirer les secteurs circonférentiels (9) hors des guides radiaux (26) par un mouvement axial.

9. Procédé selon la revendication 8, dans lequel à partir du deuxième état de fonctionnement et pour au moins une longueur de la translation radiale depuis le deuxième état de fonctionnement vers le premier état de fonctionnement, les secteurs circonférentiels (9) sont verrouillés axialement dans les guides radiaux (26).

10. Procédé selon la revendication 8, dans lequel pendant une translation radiale des secteurs circonférentiels (9) dans les guides radiaux (26) depuis le deuxième état de fonctionnement vers le premier état de fonctionnement, des broches (28) solidaires des secteurs circonférentiels fonctionnent dans les rainures respectives (26) formées dans un corps de guidage (27) qui est fixé par rapport à l'axe géométrique (X-X), commençant depuis des extrémités internes radialement (26b) des rainures (26) vers des extrémités externes radialement (26a) desdites rainures (26).

11. Procédé selon la revendication 10, dans lequel l'étape de tirage des secteurs circonférentiels (9) hors des guides radiaux (26) comprend l'étape de tirage axial des broches (28) hors des extrémités externes axialement (26a) desdites rainures (26).

12. Procédé selon la revendication 10, dans lequel à partir du deuxième état de fonctionnement et pour au moins une longueur de la translation radiale depuis ledit deuxième état de fonctionnement vers le premier état de fonctionnement une tête (31) appartenant à chaque broche (28) se met en prise avec un bord de retenue (29) de la broche respective (26), ledit bord (29) empêchant la broche (28) d'être tirée axialement hors de la rainure (26).

13. Procédé selon la revendication 12, dans lequel préalablement au tirage des secteurs circonférentiels (9) hors des guides radiaux (26), la tête (31) de chaque broche (28) est libérée du bord de retenue (29) de la rainure respective (26).

14. Procédé selon la revendication 8, dans lequel pendant la translation radiale des secteurs circonférentiels (9) dans les guide radiaux (26) depuis le deuxième état de fonctionnement vers le premier état de fonctionnement, les secteurs circonférentiels (9) portés par chacun des supports de secteur circonférentiel (13) s'éloignent les uns des autres sur leur support de secteur respectif (13) le long d'une direction circonférentielle par rapport audit support de secteur (13).

15. Appareil pour moulage et vulcanisation de pneus, comprenant :
- un moule de vulcanisation (2) ayant une cavité de moulage (8) avec des parois dont la forme correspond à celle du pneu vert (7) en cours de traitement comprenant une bande de roulement (10) ayant une surface externe radialement ; ladite cavité de moulage (10) étant circonscrite par des secteurs circonférentiels (9) adaptés pour être approchés de manière centripète et portant des éléments de relief (11) pour former un motif de bande de roulement, lesquels éléments sont tournés vers un axe géométrique (X-X) de la cavité de moulage (8) ;
- des dispositifs d'actionnement (12) pour provoquer une translation des secteurs circonférentiels (9) entre un premier état de fonctionnement dans lequel les éléments de formage en relief (11) sont éloignés radialement de la surface externe radialement de la bande de roulement (10) du pneu (7), et un deuxième état de fonctionnement, dans lequel les éléments de formage en relief (11) pénètrent au moins en partie dans la surface externe radialement de la bande de roulement (10) ;
dans lequel lesdits dispositifs d'actionnement (12) comprennent :
- une pluralité de supports de secteurs circonférentiels (13) déplaçables radialement, chacun d'eux portant au moins deux secteurs circonférentiels (9), dans laquelle lesdits au moins deux secteurs circonférentiels (9) sont déplaçables sur le support de secteur circonférentiel (13) le long d'une direction circonférentielle par rapport audit support de secteur (13) ;
- une bague d'entraînement (22) ayant une surface conique (23) mise en prise de manière coulissante avec lesdits supports de secteur circonférentiel (13), pour déterminer une translation des secteurs circonférentiels (9) entre lesdits premier et deuxième états de fonctionnement suivant un mouvement axial de la bague d'entraînement (22) ;
**caractérisé en ce qu'**il comprend en outre une base (5) comprenant :
- des guides (26) disposés radialement par rapport à l'axe géométrique (X-X), dans lesquels dans le premier état de fonctionnement les secteurs circonférentiels (9) peuvent être mis en prise axialement dans ou libérés axialement des guides radiaux respectifs (26) et dans lesquels les guides (26) sont agencés pour guider lesdits secteurs circonférentiels (9) le long de directions radiales entre les premier et deuxième état de fonctionnement.

16. Appareil selon la revendication 15, comprenant des dispositifs de verrouillage (19) placés entre les secteurs circonférentiels et les supports de secteur circonférentiel (13) respectifs et adaptés pour verrouiller les secteurs circonférentiels (9) par rapport au support de secteur circonférentiel (13) respectif au moins pendant que lesdits secteurs circonférentiels (9) sont dans le premier état de fonctionnement.

17. Appareil selon la revendication précédente, dans lequel les dispositifs de verrouillage (19) comprennent au moins une bille (19a) logée élastiquement dans un siège respectif formé dans le secteur circonférentiel (13) et adaptée pour être logée dans un évidement (21) formé dans le support de secteur circonférentiel (9).

18. Appareil selon la revendication 16, dans lequel les dispositifs de verrouillage (19) comprennent au moins une bille (19a) logée élastiquement dans un siège respectif formé dans le support de secteur circonférentiel (13) et adaptée pour être logée dans un évidement (21) formé dans le secteur circonférentiel (9).

19. Appareil selon la revendication 15, dans lequel les guides radiaux (26) consistent en des rainures (26) couplées de manière coulissante à des broches (28).

20. Appareil selon la revendication précédente, comprenant un corps de guidage (27) qui est fixé par rapport à l'axe géométrique (X-X) et porte les rainures (26), dans lequel les broches (28) sont solidaires avec les secteurs circonférentiels (9).

21. Appareil selon la revendication 19, comprenant un corps de guidage (27) qui est fixé par rapport à l'axe géométrique (X-X) et porte les broches (28), dans lequel les rainures (26) sont formées dans les secteurs circonférentiels (9).

22. Appareil selon la revendication 19, dans lequel chaque rainure (26) a une forme tronconique commençant depuis une extrémité externe radialement (26a) de celle-ci vers une extrémité interne radialement (26b) de celle-ci.

23. Appareil selon la revendication 19, dans lequel chaque broche (28) vue en section transversale a une forme allongée dans la direction de rainure (26).

24. Appareil selon la revendication 19, dans lequel chaque broche (28) a une tête (31) et chaque rainure (26) a un bord de retenue (29) mis en prise avec la tête (31), pour empêcher la broche (28) d'être axialement tirée hors de la rainure (26).

25. Appareil selon la revendication précédente, dans lequel chaque rainure (26) a une région d'extrémité sans le bord de retenue (29), pour permettre à la broche (28) d'être sortie axialement hors de la rainure respective (26) dans le premier état de fonctionnement.
